# EUROPÄISCHE PATENTSCHRIFT

(11) **EP 3 464 865 B1**
(45) Veröffentlichungstag und Bekanntmachung des Hinweises auf die Patenterteilung: **10.06.2020**
(21) Anmeldenummer: 17716912.5
(22) Anmeldetag: 12.04.2017
(51) Int. Cl.: F02M 21/02, F02M 63/00

(54) **GASVENTIL ZUM DOSIEREN VON GASFÖRMIGEN KRAFTSTOFFEN**
GAS VALVE FOR DOSING GASEOUS FUELS
SOUPAPE À GAZ POUR DOSER DES CARBURANTS GAZEUX

(30) Priorität: 27.05.2016 DE 102016209249
(43) Veröffentlichungstag der Anmeldung: 10.04.2019
(73) Patentinhaber: Robert Bosch GmbH, 70442 Stuttgart (DE)
(72) Erfinder: STUKE, Bernd, 71229 Leonberg (DE); OHLHAFER, Olaf, 74391 Erligheim (DE); JAEGLE, Felix, 71254 Ditzingen (DE); EIBERGER, Fabian, 70839 Gerlingen (DE)
(86) Internationale Anmeldenummer: PCT/EP2017/058813
(87) Internationale Veröffentlichungsnummer: WO 2017/202542

(56) Entgegenhaltungen:
- EP-A1- 1 333 177
- DE-A1-102008 041 544
- DE-A1-102013 202 633
- DE-A1-102013 222 025
- US-A1- 2013 082 126
- US-A1- 2015 267 659

## Beschreibung

Die Erfindung betrifft ein Gasventil zum Dosieren von gasförmigen Kraftstoffen, wie es beispielweise Verwendung findet, um gasförmige Kraftstoffe in einen Ansaugtrakt oder direkt in einen Brennraum einer Brennkraftmaschine einzudüsen.

### Stand der Technik

Gasförmige Kraftstoffe werden zum Betreiben von Brennkraftmaschinen seit langer Zeit benutzt. Zur Eindosierung des gasförmigen Kraftstoffs, entweder in den Ansaugtrakt einer Brennkraftmaschine oder direkt in den Brennraum einer solchen, dienen Gasventile, die ein Zumessen des gasförmigen Kraftstoffs zum genau richtigen Zeitpunkt erlauben. So ist aus der DE 10 2013 202 610 A1 ein Gasventil bekannt, dass ein Gehäuse mit einer darin längsbeweglich angeordneten Düsennadel aufweist. Die Düsennadel weist eine Längsbohrung auf, durch die der gasförmige Kraftstoff in Richtung der Eindüsöffnungen strömt. Zum Öffnen und Freigeben der Eindüsöffnungen wird die Düsennadel in Längsrichtung mit Hilfe eines Elektromagneten bewegt, der in das Gehäuse des Gasventils eingelassen ist. Die Düsennadel weist an ihrem den Eindüsöffnungen zugewandten Ende eine Dichtfläche auf, mit der sie mit einem Körpersitz im Gasventil zum Öffnen und Schließen der Eindüsöffnungen zusammenwirkt.

Das bekannte Gasventil wird in der Regel mit einem Gasdruck von unter 50 bar betrieben, meist weniger als 30 bar (3 MPa). Dieser erlaubt es, die Düsennadel durch die Wirkung eines Elektromagneten direkt zu betätigen, ohne dass auf die Druckkräfte Rücksicht genommen werden muss, die auf die Düsennadel infolge des Gasdrucks wirken. Diese Lösung ist jedoch für Gasventile, die Gas mit einem deutlich höheren Druck von bis zu 500 bar (50 MPa) eindüsen sollen, nicht mehr geeignet, da dann die Kräfte auf die Düsennadel nicht mehr zu vernachlässigen sind. Es wäre ein entsprechend großer Elektromagnet notwendig, der einen hohen Energiebedarf hat und viel Bauraum im Gasventil beansprucht.

Gasventile zum Eindüsen von gasförmigen Kraftstoffen sind bekannt aus DE102008041544 A1, US2013082126 A1, US2015267659 A1, DE102013222025 A1 und EP1333177 A1.

### Vorteile der Erfindung

Das erfindungsgemäße Gasventil mit den Merkmalen des Patentanspruchs 1 weist demgegenüber den Vorteil auf, dass es sich auch für den Einsatz mit hohen Gasdrücken eignet. Dazu weist das Gasventil ein Gehäuse mit einem Druckraum auf, der mit gasförmigen Kraftstoff befüllbar ist und in dem eine Düsennadel längsverschiebbar angeordnet ist, die durch ihre Längsbewegung einen Strömungsquerschnitt öffnet und schließt. Dabei weist die Düsennadel eine Längsbohrung auf, in die an ihrem einen Endbereich Gas aus dem Druckraum strömen kann, wobei die Düsennadel mit einem am anderen Endbereich ausgebildeten Düsensitz mit einem im Gehäuse ausgebildeten Körpersitz zum Öffnen und Schließen des Strömungsquerschnitts zusammenwirkt. An der Düsennadel ist ein Absatz ausgebildet, der mit einer die Düsennadel umgebenden Dichtscheibe zur Ausbildung eines Dichtsitzes zusammenwirkt.

Durch die Dichtscheibe und den damit zusammenwirkenden Absatz der Düsennadel kann eine Abdichtung erreicht werden, um einen Bereich der Düsennadel vom hohen Gasdruck abzuschirmen. Damit kann bei geeigneter Ausgestaltung des Dichtsitzes der Düsennadel ein Kraftausgleich in Längsrichtung der Düsennadel auch bei hohen Gasdrücken erreicht werden und damit eine leichte Beweglichkeit der Düsennadel im Druckraum des Gasventils.

Die Düsennadel ist erfindungsgemäß dabei von einem Wellbalg umgeben, der druckvorgespannt ist und der sich mit einem Ende an der Dichtscheibe gasdicht abstützt. Der vorgespannte Wellbalg drückt die Dichtscheibe gegen den Absatz der Düsennadel und erlaubt so eine Abdichtung eines Teils der Düsennadel gegen den die Düsennadel ansonsten umgebenden Druckraum und damit gegen das Gas, mit dem der Druckraum gefüllt ist.

Dabei stützt sich der Wellbalg mit seinem der Dichtscheibe abgewandten Ende an einer Anlagefläche des Gehäuses gasdicht ab. Dadurch kann der vorgespannte Wellbalg in vorteilhafter Weise die Dichtscheibe gegen den Absatz der Düsennadel drücken und dadurch einen gasdichten Dichtsitz bilden. Durch den Wellbalg, der sich beidseitig gasdicht an den jeweiligen Anlageflächen abstützt, kann so eine Abdichtung eines Teils der Düsennadel gegen den umgebenden Gasraum erreicht werden.

Weiter kommt die Dichtscheibe erfindungsgemäß bei einem Teilhub der Düsennadel an einer Anlageschulter im Druckraum zur Anlage, so dass bei einem weiteren Hub der Düsennadel der Dichtsitz zwischen Dichtscheibe und Absatz geöffnet wird, indem sich die Dichtscheibe vom Absatz entfernt. Durch das Aufsteuern des Dichtsitzes kann nun gasförmiger Kraftstoff auch den Bereich der Düsennadel umströmen, der sonst durch den Wellbalg abgedichtet ist, was zusätzliche Möglichkeiten zur Einbringung des gasförmigen Kraftstoffs durch die Eindüsöffnung eröffnet.

In einer vorteilhaften Ausgestaltung der Erfindung weist die Längsbohrung an ihrem dem Körpersitz zugewandten Ende einen erweiterten Abschnitt auf, wobei der Düsensitz an der Innenseite des erweiterten Abschnitts ausgebildet ist. Durch die Ausbildung des Dichtsitzes im Inneren der Längsbohrung lässt sich zum einen eine gute Abdichtung erzielen, wie es zum Schalten eines hohen Gasdruckes von beispielsweise 500 bar (50 MPa) notwendig ist. Zum anderen kann dadurch der Durchmesser der durch den erweiterten Abschnitt gebildeten Dichtlinie so eingestellt werden, dass sich die Düsennadel, die vom Gas im Druckraum allseitig beaufschlag ist, in Längsrichtung zumindest weitgehend kraftausgeglichen ist. Dadurch sind für die Längsbewegung der Düsennadel nur geringe Kräfte notwendig, die von gewöhnlichen Elektromagneten, wie für die Verwendung in Gasventilen bereits bekannt ist, aufgebracht werden können.

In einer weiteren vorteilhaften Ausgestaltung der Erfindung ist am Gehäuse ein Dichtabschnitt ausgebildet, der in Schließstellung der Düsennadel in die Längsbohrung ragt und an welchem der Körpersitz ausgebildet ist. Durch den in die Längsbohrung ragenden Dichtabschnitt des Gehäuses kann die Dichtlinie, an der die Düsennadel auf den Körpersitz aufliegt, an die gewünschte Stelle innerhalb des erweiterten Abschnitts der Längsbohrung platziert werden.

In einer weiteren vorteilhaften Ausgestaltung ist der erweiterte Abschnitt der Längsbohrung im Längsschnitt gesehen zumindest im Wesentlichen konisch. Dies ist insbesondere dann von Vorteil, wenn der Dichtabschnitt des Gehäuses eine Halbkugelform aufweist, so dass sich eine näherungsweise linienförmige Berührung zwischen der Innenwand der Längsbohrung und dem Körpersitz bildet, was eine zuverlässige Abdichtung an dieser Stelle gewährleistet.

In einer weiteren vorteilhaften Ausgestaltung ist die Düsennadel an ihrem dem Körpersitz abgewandten Ende mit einem Magnetanker verbunden. Dieser wirkt in vorteilhafterweise mit einem Elektromagneten zusammen, der innerhalb des Gehäuses angeordnet ist und durch den eine Längskraft auf die Düsennadel ausgeübt werden kann, um sie in Längsrichtung zu bewegen und dadurch den Einströmquerschnitt freizuschalten.

In einer weiteren vorteilhaften Ausgestaltung ist die Düsennadel an ihren dem Körpersitz zugewandten Endbereich im Druckraum geführt, so dass die Düsennadel präzise in Bezug auf den Körpersitz positioniert ist.

In einer weiteren vorteilhaften Ausgestaltung weisen die Eindüsöffnungen einen kreisrunden oder nierenförmigen Querschnitt auf. Auf diese Weise lässt sich der Gesamtdurchflussquerschnitt der Eindüsöffnungen in einem sehr weiten Bereich variieren und auch die Richtung des gasförmigen Gasstroms beim Austritt aus den Eindüsöffnungen lässt sich so gezielt einstellen.

### Zeichnung

In der Zeichnung ist ein erfindungsgemäßes Gasventil im Längsschnitt schematisch dargestellt, dazu zeigt
- Figur 1: einen Längsschnitt durch ein erfindungsgemäßes Gasventil in geschlossenem Zustand,

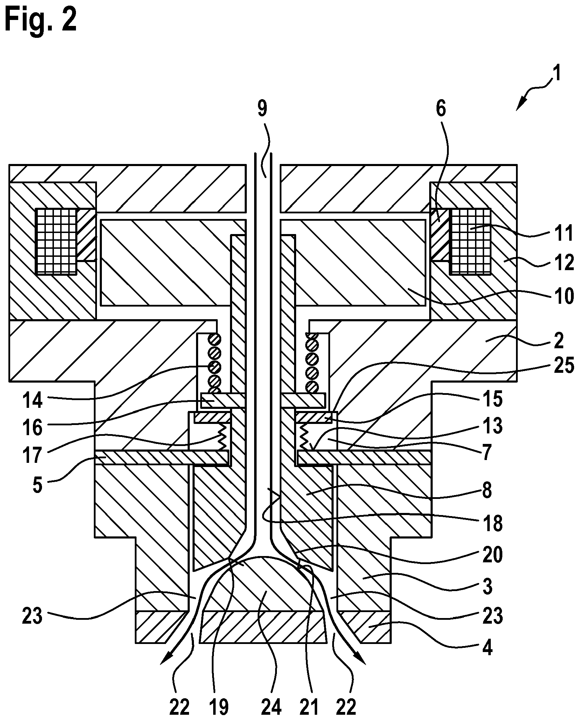

- Figur 2: dasselbe Gasventil in geöffnetem Zustand und
- Figur 3a und 3b: eine Draufsicht auf zwei Ausführungsbeispiele der Öffnungsscheibe.

### Beschreibung des Ausführungsbeispiels

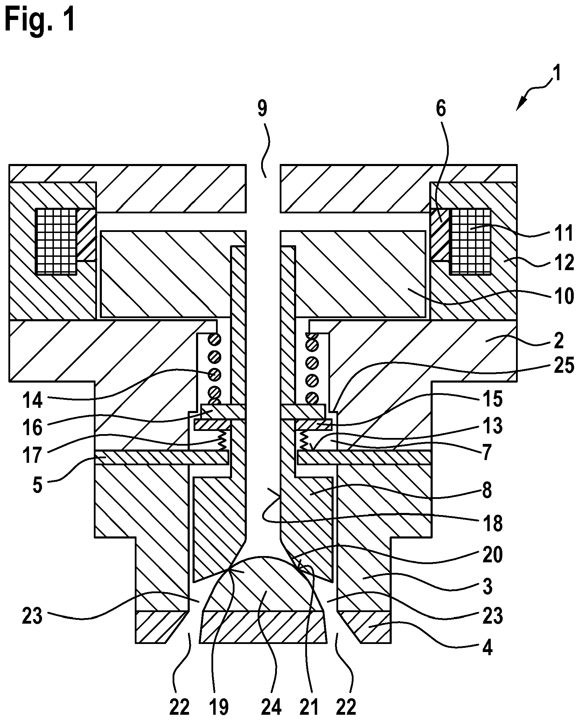

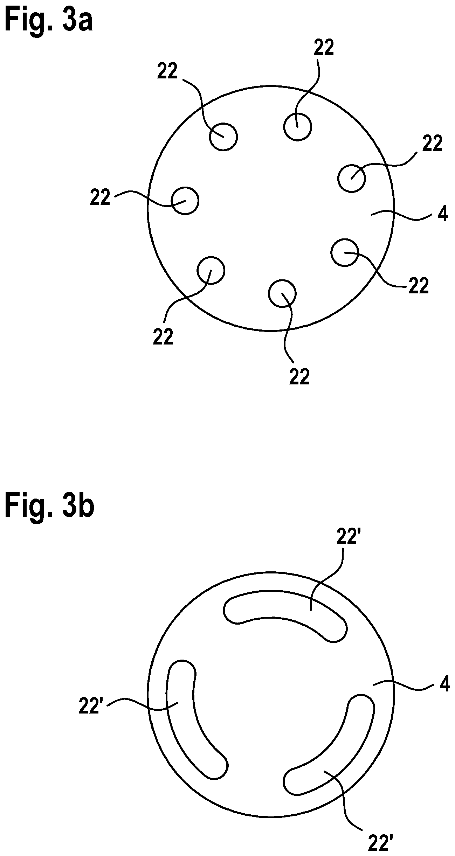

In Figur 1 ist ein erfindungsgemäßes Gasventil im Längsschnitt schematisch dargestellt. Das Gasventil weist ein Gehäuse 1 auf, das einen Ventilkörper 2, einen Düsenkörper 3 und eine Öffnungsscheibe 4 umfasst, die durch eine nicht gezeigte Vorrichtung, beispielsweise eine Spannmutter, gasdicht gegeneinander Verspannt sind. Zwischen dem Ventilkörper 2 und dem Düsenkörper 3 ist eine Zwischenplatte 5 eingespannt, die in einen Druckraum 7 ragt, der im Inneren des Ventilköpers 2 und des Düsenkörpers 3 ausgebildet ist. Der Druckraum 7 kann über einen Zuströmkanal 9, der im Gehäuse 1 ausgebildet ist, mit Gas unter Druck befüllt werden, beispielweise einen gasförmigen Kraftstoff. Am unteren Ende des Gasventils sind im Düsenkörper 3 Eindüskanäle 23 ausgebildet und in der Öffnungsscheibe 4, die das Ende des Gehäuses 1 bildet, entsprechende Eindüsöffnungen 22, durch die Gas aus dem Druckraum 7 ausströmen kann. Die Eindüsöffnungen 22 bzw. die Eindüskanäle 23 können dabei entweder im Querschnitt kreisrund oder nierenförmig ausgebildet sein, je nachdem welche Querschnitte für das ausströmende Gas benötigt werden. In Fig. 3a ist dazu eine Draufsicht auf eine Öffnungsscheibe 4 mit kreisrunden Eindüsöffnungen 22 gezeigt und in Fig. 3b eine Draufsicht auf eine Öffnungsscheibe 4 mit nierenförmigen Eindüsöffnungen 22'. Die Eindüskanäle 23 sind natürlich so angeordnet und ausgebildet, dass das Gas aus dem Druckraum durch die Eindüskanäle 23 direkt in die Eindüsöffnungen 22, 22' strömen kann. Über den Winkel der Eindüsöffnungen 22, 22' bzw. der Eindüskanäle 23 kann zusätzlich die Richtung beeinflusst werden, unter der das Gas aus dem Druckraum 7 ausströmt.

Zur Steuerung des Gasstroms ist im Druckraum 7 eine längsbewegliche Düsennadel 8 angeordnet. Die Düsennadel 8 ist an ihrem den Eindüsöffnungen 22 abgewandten Ende mit einem Magnetanker 10 verbunden, der mit einem Elektromagneten zusammenwirkt, welcher durch eine Spule 11 und einen Magnetkern 12 gebildet wird. Dabei wird die Spule 11 durch einen amagnetischen Dichtring 6 gegen den gasförmigen Kraftstoff abgedichtet. Durch Betätigung des Elektromagneten 11, 12 wird der Magnetanker 10 von den Eindüsöffnungen 22 weggezogen und damit auch die Düsennadel 8, die auf diese Weise in Längsrichtung innerhalb des Druckraums 7 bewegt werden kann. Die Düsennadel 8 weist dabei an ihrem den Eindüsöffnungen 22 zugewandten Ende einen im Durchmesser erweiterten Abschnitt auf, mit der sie im Druckraum 7 geführt ist. Darüber hinaus ist in der Düsennadel 8 eine Längsbohrung 18 ausgebildet, die die Düsennadel 8 in ihrer gesamten Länge durchzieht. Die Längsbohrung 18 mündet dabei mit ihrem den Eindüsöffnungen 22 abgewandten Ende in den Druckraum 7 und kann über dieses mit Gas befüllt werden. Die Längsbohrung 18 erweitert sich am gegenüberliegenden zu einem erweiterten Abschnitt 20, der im Längsschnitt betrachtet beispielsweise konisch ausgebildet ist. Im Inneren des erweiterten Abschnitts 20 ist ein Düsensitz 19 gebildet, der mit einem Körpersitz 21 zum Abdichten der Längsbohrung 18 gegenüber den Eindüskanälen 23 zusammenwirkt. Der Körpersitz 21 ist dabei an einem Dichtabschnitt 24 ausgebildet, der Teil des Düsenkörpers 3 ist und der zumindest dann, wenn die Düsennadel 8 in Anlage am Körpersitz 21 ist, in die Längsbohrung 18 hineinragt. Der Dichtabschnitt 24 weist hier die Form einer Halbkugel auf und liegt damit innerhalb des erweiterten Abschnitts 20 an einer kreisförmigen Dichtlinie auf, wenn die Düsennadel 8 in ihrer Schließstellung ist. Da die Dichtlinie im Wesentlichen linienförmig ist, wird dort eine hohe Flächenpressung und damit eine zuverlässige Abdichtung gebildet.

An der Düsennadel 8 ist ein Absatz 16 ausgebildet, der von der Düsennadel 8 gesehen radial nach außen zeigt und zwischen dem und einen Absatz im Druckraum 7 eine Schließfeder 14 unter Druckvorspannung angeordnet ist, so dass durch die Schließfeder 14 eine Federspannung auf die Düsennadel 8 in Richtung des Körpersitzes 21 ausgeübt wird. Darüber hinaus umgibt die Düsennadel 8 ein Wellbalg 17, der ebenfalls unter Druckvorspannung angeordnet ist und sich einerseits an der Zwischenplatte 5 abstützt und andererseits an einer Dichtscheibe 15, die die Düsennadel 8 umgibt und die sich dem Wellbalg 17 abgewandt am Absatz 16 der Düsennadel 8 abstützt. Sowohl die Verbindung des Wellbalgs 17 zur Zwischenplatte 5 als auch die Verbindung des Wellbalgs zur Dichtscheibe 15 sind gasdicht ausgebildet. Ebenso dichtet die Dichtscheibe 15 gegen den Absatz 16 gasdicht ab, wenn sie durch die Kraft des vorgespannten Wellbalgs 17 entgegen diesen Absatz 16 gedrückt wird. Es kann auch vorgesehen sein, dass der Wellbalg 17 an seinen Enden mit den entsprechenden Auflageflächen verklebt oder verschweißt ist, um die Abdichtung zu verbessern. Der Dichtscheibe 15 gegenüberliegend ist im Druckraum 7 eine Anlageschulter 25 ausgebildet, die axial beabstandet zur Dichtscheibe 5 ausgebildet ist.

Die Funktionsweise des Gasventils ist wie folgt: Zu Beginn des Eindüsvorgangs ist der Druckraum 7 mit Gas unter einem vorgegebenen Druck befüllt, wobei das zuvor beispielsweise durch eine Pumpe verdichtete Gas über den Zuströmkanal 9 in den Druckraum 7 gelangt. Die Ventilnadel 8 wird durch die Kraft der Schließfeder 14 gegen den Körpersitz 21 gedrückt, so dass sie mit dem Düsensitz 19 auf den Körpersitz 21 gasdicht aufsitzt. Damit ist die Längsbohrung 18, die Gas aus dem Druckraum 7 enthält, gegen die Eindüsöffnungen 22 bzw. die Eindüskanäle 23 abgedichtet. Die Dichtscheibe 15 wird durch die Kraft des vorgespannten Wellbalgs 17 gegen den Absatz 16 gedrückt und dichtet gasdicht ab, so dass kein Gas aus dem Druckraum 7 zwischen der Düsennadel 8 und der Wand des Druckraums 7 strömen kann. Dies ist zur Abdichtung des Gasventils notwendig, da die Düsennadel 8 im Düsenkörper 3 zwar eng an der Außenseite geführt ist, jedoch ein unvermeidlicher Leckagespalt hier zwischen dem Düsenkörper 3 und der Düsennadel 8 verbleibt.

Soll Gas ausgedüst werden, so wird der Elektromagnet 11, 12 bestromt und zieht den Magnetanker 10 und damit auch die Düsennadel 8 vom Körpersitz 21 weg. Dadurch hebt der Düsensitz 19 vom Körpersitz 21 ab und gibt dazwischen einen Strömungsquerschnitt frei, durch den Gas aus der Längsbohrung 18 in den Eindüskanal 23 und von dort durch die Eindüsöffnungen 22 strömen kann. Durch den Hub der Düsennadel 8 nähert sich die Dichtscheibe 15 einer Anlageschulter 25, die im Druckraum 27 ausgebildet ist, bis die Dichtscheibe 15 an der Anlageschulter 25 zur Anlage kommt. Durch die weitere Längsbewegung der Düsennadel 8 trennen sich der Absatz 16 und die Dichtscheibe 15, so dass zwischen diesen beiden Bauteilen ein weiterer Strömungsquerschnitt für das Gas aus dem Druckraum 7 eröffnet wird. Das Gas kann in den Bereich zwischen dem Wellbalg 17 und der Düsennadel 8 strömen und von dort weiter durch den Leckagespalt, der zwischen der Düsennadel 8 und der Wand des Düsenkörpers 3 verbleibt und von dort weiter in die Eindüskanäle 23, wo sich dieser Gasstrom mit dem Gasstrom aus der Längsbohrung 18 mischt. Soll dieser Gaspfad genutzt werden, so können an der Außenseite der Düsennadel im Bereich des Düsenkörpers 3 ein oder mehrere Anschliffe an der Außenseite der Düsennadel ausgebildet werden, um den Strömungsquerschnitt zu vergrößern. Zur Beendigung der Gaseindüsung wird die Bestromung des Elektromagneten 11, 12 beendet, so dass die Kraft der Schließfeder 14 die Düsennadel 8 wieder zurück in ihre Schließstellung drückt. Durch die Anlage des Düsensitzes 19 auf den Körpersitz 21 wird die Längsbohrung 18 und durch das Aufsitzen des Absatzes 16 auf der Dichtscheibe 15 der äußere Gaspfad wieder verschlossen, so dass die Gaseindüsung insgesamt beendet wird.

Das erfindungsgemäße Gasventil ist insbesondere geeignet, um Gas auch unter hohem Druck eindüsen zu können, beispielsweise mit einem Druck von 500 bar. Da der Wellbalg, der für eine zuverlässige Abdichtung im geschlossenen Zustand des Gasventils sorgt, in diesem Fall sehr stabil ausgeführt sein muss, um dem entsprechenden Druck standhalten zu können, ist er relativ steif und kann nur wenig vorgespannt werden. Durch die Trennung von Absatz 16 und Dichtscheibe 15 im Zug der Öffnungshubs der Düsennadel 8 ist jedoch nur ein geringer Hub des Wellbalgs 17 nötigt, so dass auch ein recht steifer Wellbalg hier eingesetzt werden kann, ohne die Funktionsfähigkeit des Gasventils zu beeinträchtigen.

Der Wellbalg trennt den mit Gas unter dem Einströmdruck gefüllten Bereich, der dem Druck im Zuströmkanal 9 entspricht, von dem Bereich, der nur während der Gaseindüsung mit Gas unter hohem Druck durchströmt wird. Ist der Durchmesser des Wellbalgs gleich dem Sitzdurchmesser des Düsensitzes 19, so ist die Düsennadel in Längsrichtung kraftausgeglichen, ohne dass eine Leckage bei geschlossenem Gasventil auftritt.

Die Öffnungsscheibe 4 und der Düsenkörper 3 können auch einstückig ausgeführt werden, jedoch lässt sich durch eine gesonderte Öffnungsscheibe und die darin ausgebildeten Eindüsöffnungen 22 die Richtung des ausströmenden Gases leichter beeinflussen, so dass das Gas genau an die gewünschte Stelle im Brennraum oder im Saugrohr einer Brennkraftmaschine gebracht werden kann.

## Patentansprüche

1. Gasventil zum Eindüsen von gasförmigen Kraftstoffen mit einem Gehäuse (1), in dem ein mit gasförmigem Kraftstoff befüllbarer Druckraum (7) ausgebildet ist, in dem eine Düsennadel (8) längsverschiebbar angeordnet ist, die eine Längsbohrung (18) aufweist, in die an ihrem einen Endbereich Gas aus dem Druckraum (7) strömen kann und die mit einem am anderen Endbereich ausgebildeten Düsensitz (19) mit einem im Gehäuse (1) ausgebildeten Körpersitz (21) zum Öffnen und Schließen eines Strömungsquerschnitts zusammenwirkt, wobei an der Düsennadel (8) ein Absatz (16) ausgebildet ist, der mit einer die Düsennadel (8) umgebenden Dichtscheibe (15) zur Ausbildung eines Dichtsitzes zusammenwirkt, **dadurch gekennzeichnet, dass** die Düsennadel von einem Wellbalg (17) umgeben ist, der druckvorgespannt ist und sich mit einem Ende an der Dichtscheibe (15) und mit seinem der Dichtscheibe (15) abgewandten Ende an einer Anlagefläche (13) des Gehäuses (1) gasdicht abstützt, wobei die Dichtscheibe (15) durch den vorgespannten Wellbalg (17) gegen den Absatz (16) der Düsennadel (8) gedrückt wird und dadurch einen gasdichten Dichtsitz bildet, und die Dichtscheibe (15) bei einem Teilhub der Düsennadel (8) an einer Anlageschulter (25) im Druckraum (7) zur Anlage kommt und bei einem weiteren Hub der Düsennadel (8) der Dichtsitz zwischen Dichtscheibe (15) und Absatz (16) geöffnet wird, indem sich die Dichtscheibe (15) vom Absatz (16) entfernt.

2. Gasventil nach Anspruch1, **dadurch gekennzeichnet, dass** der Durchmesser des Wellbalgs (17) dem Durchmesser des Dichtsitzes (19) der Düsennadel (8) entspricht, so dass durch den Gasdruck im Druckraum (7) keine oder nur geringe in Längsrichtung der Düsennadel (8) wirkenden Kräfte ausgeübt werden, wenn die Düsennadel (8) in Anlage am Düsensitz (19) ist.

3. Gasventil nach Anspruch 1, **dadurch gekennzeichnet, dass** sich die Längsbohrung (18) an ihrem dem Körpersitz (21) zugewandten Ende einen erweiterten Abschnitt (20) aufweist, wobei der Düsensitz (19) an der Innenseite des erweiterten Abschnitts (20) ausgebildet ist.

4. Gasventil nach Anspruch 3, **dadurch gekennzeichnet, dass** in Schließstellung der Düsennadel (8) ein Dichtabschnitt (24) des Gehäuses (1) in die Längsbohrung (18) ragt, wobei an diesem Dichtabschnitt (24) der Körpersitz (21) ausgebildet ist.

5. Gasventil nach Anspruch 3 oder 4, **dadurch gekennzeichnet, dass** der erweitere Abschnitt (20) der Längsbohrung (18) im Längsschnitt gesehen zumindest im Wesentlichen eine konische Form aufweist.

6. Gasventil nach Anspruch 4, **dadurch gekennzeichnet, dass** der Dichtabschnitt (24) des Gehäuses (1) eine Halbkugelform aufweist.

7. Gasventil nach Anspruch 3 oder 4, **dadurch gekennzeichnet, dass** die Düsennadel (8) an ihrem dem Körpersitz (21) abgewandten Ende mit einem Magnetanker (10) verbunden ist.

8. Gasventil nach Anspruch 7, **dadurch gekennzeichnet, dass** im Gehäuse (1) ein Elektromagnet (11; 12) angeordnet ist, der mit dem Magnetanker (10) zusammenwirkt und dadurch die Düsennadel (8) in Längsrichtung bewegen kann.

9. Gasventil nach Anspruch 1, **dadurch gekennzeichnet, dass** die Düsennadel (8) an ihrem dem Körpersitz (21) zugewandten Endbereich im Druckraum (7) geführt ist.

10. Gasventil nach Anspruch 1, **dadurch gekennzeichnet, dass** am körpersitzseitigen Ende des Gehäuses (1) wenigstens eine Eindüsöffnung (22) ausgebildet ist, über die das durch den Strömungsquerschnitt strömende Gas ausströmen kann.

11. Gasventil nach Anspruch 10, **dadurch gekennzeichnet, dass** die Eindüsöffnungen (22) einen kreisrunden oder nierenförmigen Querschnitt aufweisen.

## Claims

1. Gas valve for injecting gaseous fuels, having a housing (1) in which there is formed a pressure space (7) which is able to be filled with gaseous fuel, in which pressure space there is arranged in a longitudinally displaceable manner a nozzle needle (8) having a longitudinal bore (18) into which, at one end region thereof, gas is able to flow from the pressure space (7) and, with a nozzle seat (19) formed at the other end region, interacts with a body seat (21), formed in the housing (1), for the purpose of opening and closing a flow cross section, wherein, on the nozzle needle (8), there is formed a shoulder (16) which interacts with a sealing disc (15), surrounding the nozzle needle (8), for the purpose of forming a sealing seat, **characterized in that** the nozzle needle is surrounded by a corrugated bellows (17) which is compressively prestressed and which is supported in a gas-tight manner by one end against the sealing disc (15) and by its end facing away from the sealing disc (15) against a bearing surface (13) of the housing (1), wherein the sealing disc (15) is pushed against the shoulder (16) of the nozzle needle (8) by the prestressed corrugated bellows (17) and in this way forms a gas-tight sealing seat, and, with a partial lift of the nozzle needle (8), the sealing disc (15) comes to bear against a bearing shoulder (25) in the pressure space (7) and, with a further lift of the nozzle needle (8), the sealing seat is opened between the sealing disc (15) and the shoulder (16) **in that** the sealing disc (15) is moved away from the shoulder (16).

2. Gas valve according to Claim 1, **characterized in that** the diameter of the corrugated bellows (17) corresponds to the diameter of the sealing seat (19) of the nozzle needle (8), with the result that no or only small forces acting in the longitudinal direction of the nozzle needle (8) are exerted by the gas pressure in the pressure space (7) when the nozzle needle (8) bears against the nozzle seat (19).

3. Gas valve according to Claim 1, **characterized in that** the longitudinal bore (18) has at its end facing the body seat (21) an extended portion (20), wherein the nozzle seat (19) is formed on the inner side of the extended portion (20).

4. Gas valve according to Claim 3, **characterized in that**, in the closed position of the nozzle needle (8), a sealing portion (24) of the housing (1) projects into the longitudinal bore (18), wherein the body seat (21) is formed on said sealing portion (24).

5. Gas valve according to Claim 3 or 4, **characterized in that** the extended portion (20) of the longitudinal bore (18), as seen in a longitudinal section, at least substantially has a conical shape.

6. Gas valve according to Claim 4, **characterized in that** the sealing portion (24) of the housing (1) has a hemispherical shape.

7. Gas valve according to Claim 3 or 4, **characterized in that**, at its end facing away from the body seat (21), the nozzle needle (8) is connected to a magnet armature (10).

8. Gas valve according to Claim 7, **characterized in that**, in the housing (1), there is arranged an electromagnet (11; 12) which interacts with the magnet armature (10) and, in this way, is able to move the nozzle needle (8) in the longitudinal direction.

9. Gas valve according to Claim 1, **characterized in that**, at its end region facing the body seat (21), the nozzle needle (8) is guided in the pressure space (7).

10. Gas valve according to Claim 1, **characterized in that**, at the body seat-side end of the housing (1), there is formed at least one injection opening (22), via which the gas flowing through the flow cross section is able to flow out.

11. Gas valve according to Claim 10, **characterized in that** the injection openings (22) have a circular or kidney-shaped cross section.

## Revendications

1. Soupape à gaz pour injecter des carburants gazeux, comprenant un boîtier (1) dans lequel est réalisé un espace de pression (7) pouvant être rempli de carburant gazeux, dans lequel est disposé un pointeau de buse (8) déplaçable longitudinalement, qui présente un alésage longitudinal (18) dans lequel, au niveau de l'une de ses régions d'extrémité, peut s'écouler du gaz provenant de l'espace de pression (7) et qui, avec un siège de buse (19) réalisé au niveau de l'autre région d'extrémité, coopère avec un siège de corps (21) réalisé dans le boîtier (1) pour ouvrir et fermer une section transversale d'écoulement, un épaulement (16) étant réalisé au niveau du pointeau de buse (8), lequel coopère avec un disque d'étanchéité (15) entourant le pointeau de buse (8) en vue de réaliser un siège d'étanchéité, **caractérisée en ce que** le pointeau de buse est entouré par un soufflet ondulé (17) qui est précontraint par la pression et qui s'appuie de manière étanche aux gaz par une extrémité contre le disque d'étanchéité (15) et par son extrémité opposée au disque d'étanchéité (15) contre une surface d'appui (13) du boîtier (1), le disque d'étanchéité (15) étant pressé par le soufflet ondulé précontraint (17) contre l'épaulement (16) du pointeau de buse (8) et formant de ce fait un siège d'étanchéité étanche aux gaz et le disque d'étanchéité (15), dans le cas d'une course partielle du pointeau de buse (8), venant en appui contre un épaulement d'appui (25) dans l'espace de pression (7) et dans le cas d'une course supplémentaire du pointeau de buse (8), le siège d'étanchéité entre le disque d'étanchéité (15) et l'épaulement (16) étant ouvert par le fait que le disque d'étanchéité (15) s'écarte de l'épaulement (16).

2. Soupape à gaz selon la revendication 1, **caractérisée en ce que** le diamètre du soufflet ondulé (17) correspond au diamètre du siège d'étanchéité (19) du pointeau de buse (8) de telle sorte qu'aucune force ou que seulement des forces faibles agissant dans la direction longitudinale du pointeau de buse (8) soient exercées par la pression de gaz dans l'espace de pression (7) lorsque le pointeau de buse (8) est en appui contre le siège de buse (19).

3. Soupape à gaz selon la revendication 1, **caractérisée en ce que** l'alésage longitudinal (18) présente une portion élargie (20) au niveau de son extrémité tournée vers le siège de corps (21), le siège de buse (19) étant réalisé au niveau du côté intérieur de la portion élargie (20).

4. Soupape à gaz selon la revendication 3, **caractérisée en ce que** dans la position de fermeture du pointeau de buse (8), une portion d'étanchéité (24) du boîtier (1) fait saillie dans l'alésage longitudinal (18), le siège de corps (21) étant réalisé au niveau de cette portion d'étanchéité (24).

5. Soupape à gaz selon la revendication 3 ou 4, **caractérisée en ce que** la portion élargie (20) de l'alésage longitudinal (18), vue en coupe longitudinale, présente au moins essentiellement une forme conique.

6. Soupape à gaz selon la revendication 4, **caractérisée en ce que** la portion d'étanchéité (24) du boîtier (1) présente une forme hémisphérique.

7. Soupape à gaz selon la revendication 3 ou 4, **caractérisée en ce que** le pointeau de buse (8) est connecté à un induit magnétique (10) au niveau de son extrémité opposée au siège de corps (21).

8. Soupape à gaz selon la revendication 7, **caractérisée en ce qu'**un électroaimant (11 ; 12) est disposé dans le boîtier (1), lequel coopère avec l'induit magnétique (10) et peut de ce fait déplacer le pointeau de buse (8) dans la direction longitudinale.

9. Soupape à gaz selon la revendication 1, **caractérisée en ce que** le pointeau de buse (8) est guidé dans l'espace de pression (7) au niveau de sa région d'extrémité tournée vers le siège de corps (21).

10. Soupape à gaz selon la revendication 1, **caractérisée en ce qu'**au moins une ouverture d'injection (22) est réalisée au niveau de l'extrémité du côté du siège de corps du boîtier (1), par le biais de laquelle le gaz s'écoulant à travers la section transversale d'écoulement peut sortir.

11. Soupape à gaz selon la revendication 10, **caractérisée en ce que** les ouvertures d'injection (22) présentent une section transversale ronde circulaire ou en forme de haricot.
